# EUROPÄISCHE PATENTSCHRIFT

(11) **EP 4 423 465 B1**
(45) Veröffentlichungstag und Bekanntmachung des Hinweises auf die Patenterteilung: **25.03.2026**
(21) Anmeldenummer: 22785742.2
(22) Anmeldetag: 23.09.2022
(51) Int. Cl.: G01G 19/08, G01G 19/12

(54) **VORRICHTUNG UND VERFAHREN ZUR PLAUSIBILITÄTSPRÜFUNG VON MESSWERTEN EINES FAHRZEUGEIGENEN ACHSLASTMESSSYSTEMS**
APPARATUS AND METHOD FOR CHECKING THE PLAUSIBILITY OF MEASURED VALUES FROM A VEHICLE'S AXLE LOAD MEASUREMENT SYSTEM
APPAREIL ET PROCÉDÉ POUR VÉRIFIER LA PLAUSIBILITÉ DE VALEURS MESURÉES D'UN SYSTÈME DE MESURE DE CHARGE D'ESSIEU D'UN VÉHICULE

(30) Priorität: 25.10.2021 DE 102021127654
(43) Veröffentlichungstag der Anmeldung: 04.09.2024
(73) Patentinhaber: ZF CV Systems Europe BV, 1170 Brüssel (BE)
(72) Erfinder: DIECKMANN, Thomas, 30982 Pattensen (DE); EHLERS, Arne, 30449 Hannover (DE); LÜLFING, Ralph-Carsten, 30826 Garbsen (DE); RICKE, Janik, 31311 Uetze (DE)
(74) Vertreter: Ohlendorf, Henrike
(86) Internationale Anmeldenummer: PCT/EP2022/076568
(87) Internationale Veröffentlichungsnummer: WO 2023/072497

(56) Entgegenhaltungen:
- US-A- 5 086 656

## Beschreibung

Die Erfindung betrifft eine Vorrichtung zur Plausibilitätsprüfung von mittels einer Sensorik ermittelbaren Messwerten eines Achslastmesssystems, mit dem die auf allen Achsen eines Fahrzeugs ruhende Achslast als ein erster Gesamtachslastwert bestimmbar ist. Außerdem betrifft die Erfindung ein Verfahren zum Betreiben dieser Vorrichtung.

Es ist bereits bekannt, dass Bremskraftregler in Radfahrzeugen die aktuelle Achslast eines zu verzögernden Fahrzeugs berücksichtigen. Zur Messung einer auf eine Fahrzeugachse wirkenden Achslast ist es aus der EP 2 554 409 B1 bekannt, ein Bauteil eines Fahrgestells über eine Koppelstange mit einem Stabilisator einer Fahrzeugachse gelenkig zu verbinden. Die Koppelstange ist an ihren beiden Enden jeweils mit einem Exzenter verbunden, über welche die Koppelstange drehbar an dem Stabilisator und dem Fahrgestell angelenkt ist. Bei einer Beladung des Fahrzeugs verringert sich der Abstand zwischen dem Bauteil des Fahrgestells und dem Bauteil der Achse, wobei diese Abstandsänderung in eine proportionale Schwenkbewegung der Exzenter transformiert wird. Diese Schwenkbewegungen sind mittels eines Drehwinkelsensors messbar, welcher daraus ein zur Verschwenkung proportionales Messsignal erzeugt. Aus diesem Messsignal lässt sich mit recht hoher Genauigkeit die beladungsbedingte Achslast an der Fahrzeugachse berechnen. Nachteilig bei derartigen Achslastmesssystemen ist die geringe Manipulationssicherheit der geschilderten mechanischen Kopplung. Zudem ist bei derartigen Achslastmesssystemen der Drehwinkelsensor aufgrund von widrigen Umgebungseinflüssen im Bereich des Fahrzeugunterbodens verschleißanfällig.

Aus der DE 38 21 569 A1 ist eine Vorrichtung zur Ermittlung des Einfederniveaus an einem mittels Luftfederbälge abgefederten und mittels Stoßdämpfer gedämpften Fahrzeug bekannt. Bei dieser Vorrichtung ist zur Ermittlung eines ladungsbedingten Einfederniveaus des Fahrzeugs ein linearer Wegmesssensor unmittelbar in einen Stoßdämpfer des Fahrzeugs integriert. Hierdurch ist eine hohe Manipulationssicherheit sowie Funktionssicherheit des Sensors gegenüber nachteiligen Umgebungseinflüssen im Bereich des Fahrzeugunterbodens gegeben. Von Nachteil ist jedoch, dass zur Messung eines ladungsbedingten Einfederniveaus speziell ausgebildete Stoßdämpfer erforderlich sind.

Aus der WO 02/03346 A1 ist ein Fahrzeug-Informationssystem mit einem integrierten Eventrecorder bekannt. Gemäß einer Ausführungsform weist dieses Fahrzeug-Informationssystem ein Gehäuse mit einem manipulationssicheren Siegel auf, welches nicht zerstörungsfrei lösbar ist. Das Gehäuse kann somit ausschließlich durch autorisiertes Personal unter Verwendung von Passwörtern geöffnet werden. Das Fahrzeug-Informationssystem weist mehrere Sensoreinheiten im Bereich der Federn, der Achsen und/oder des Fahrwerks eines Lastkraftfahrzeugs auf, welche zum Beispiel mit Dehnungsmessstreifen realisiert sein können. Die Sensoreinheiten sind dazu ausgebildet, Abstandsunterschiede zwischen den genannten Fahrzeugkomponenten zu messen, welche aufgrund der auf diese Komponenten einwirkenden Kräfte entstehen. Demnach nutzt dieses Fahrzeug-Informationssystem eine konventionelle, fahrzeugeigene, jedoch nicht zuverlässig gegen unberechtigte Eingriffe geschützte Sensorik.

US 5 086 656 A offenbart ein Achslastmesssystem für ein Fahrzeug, wobei das Fahrzeug zumindest eine Achse hat. Über das Achslastmesssystem kann eine erste Achslast und eine zweite Achslast bestimmt werden. Die erste Achslast und die zweite Achslast werden dabei mit direkten in das Achslastmesssystem integrierte Sensoren an der entsprechenden Achse bestimmt. Über die erste Achslast und die zweite Achslast kann dann durch Bildung eines Mittelwertes die finale Gesamtachslast ermittelt werden.

Vor diesem Hintergrund liegt der Erfindung die Aufgabe zugrunde, eine Vorrichtung sowie ein Verfahren vorzustellen, mittels denen bei Nutzung eines konventionellen fahrzeugeigenen Achslastmesssystems eines Fahrzeugs dessen Messsicherheit verbessert ist, um Messfehler zu vermeiden, welche aufgrund von unzulässigen Manipulationen und/oder Verschleißerscheinungen am Achslastmesssystems entstehen können.

Die Lösung der vorrichtungsbezogenen Aufgabe wird mit einer Vorrichtung zur Plausibilitätsprüfung von Messwerten eines konventionellen, fahrzeugeigenen Achslastmesssystems eines Fahrzeugs erreicht, welche die Merkmale des Anspruchs 1 aufweist. Eine Vorrichtungsvariante ist in dem unabhängigen Vorrichtungsanspruch spezifiziert. Die verfahrensbezogene Aufgabe wird mittels eines Verfahrens gelöst, welches die Merkmale der unabhängigen Verfahrensansprüche 6 und 7 aufweist. Vorteilhafte Weiterbildungen sind in den jeweils zugeordneten abhängigen Ansprüchen definiert.

Demnach betrifft die Erfindung zunächst eine Vorrichtung zur Plausibilitätsprüfung von mittels einer Sensorik ermittelbaren Messwerten eines Achslastmesssystems, mit dem die auf allen Achsen eines Fahrzeugs ruhende Achslast als ein erster Gesamtachslastwert G_{A1} bestimmbar ist. Bei dem Fahrzeug kann es sich beispielsweise um ein als Personenfahrzeug oder Nutzfahrzeug ausgebildetes Radfahrzeug handeln.

Zur Lösung der erwähnten Aufgabe ist bei dieser Vorrichtung vorgesehen, dass die Vorrichtung einen Komparator und eine Recheneinheit aufweist, dass mittels der Recheneinheit ein zweiter Gesamtachslastwert G_{A2} berechenbar ist, dass dem Komparator der erste Gesamtachslastwert G_{A1} und der zweite Gesamtachslastwert G_{A2} zuführbar ist, dass mittels des Komparators ein Vergleich zwischen den beiden Gesamtachslastwerten G_{A1}, G_{A2} durchführbar ist, und dass bei einer hinreichend großen Differenz ΔG zwischen dem ersten Gesamtachslastwert G_{A1} und dem zweiten Gesamtachslastwert G_{A2} mittels des Komparators eine Fehlermeldung erzeugbar und/oder ein Signalgeber aktivierbar ist.

Die Vorrichtung ist demnach derartig ausgebildet, dass diese zwei Gesamtachslastwerte G_{A1}, G_{A2} miteinander vergleichen kann, von denen der erste Gesamtachslastwert G_{A1} durch sensorische Messungen relativ genau ermittelbar ist, während der zweite Gesamtachslastwert G_{A2} etwas weniger genau bestimmbar ist. Zur Ermittlung des ersten Gesamtachslastwertes G_{A1} ist beispielsweise nur jeweils ein Drucksensor pro Luftfederbalg einer Luftfedervorrichtung am Fahrzeug und damit die Nutzung von nur einem Messprinzip notwendig. Zur Berechnung des zweiten Gesamtachslastwertes G_{A2} wird beispielsweise das aktuelle Abtriebsdrehmoment eines Antriebsmotors des Fahrzeugs sowie die aktuelle Fahrzeugbeschleunigung benötigt, weshalb hierzu die Nutzung von zumindest zwei Messprinzipien notwendig ist, was eine etwas ungenauere Bestimmung des zweiten Gesamtachslastwertes G_{A2} verursacht.

Die Vorrichtung ist so ausgebildet, dass diese bei einer hinreichend großen Differenz ΔG zwischen dem ersten Gesamtachslastwert G_{A1} und dem zweiten Gesamtachslastwert G_{A2} eine Fehlermeldung ausgegeben kann, welche Anlass zur Überprüfung des Messsystems geben soll.

Gemäß der erfindungsgemäßen Vorrichtung ist vorgesehen, dass der Recheneinheit der aktuelle Wert der Fahrzeugbeschleunigung a sowie der aktuelle Wert der an dem Fahrzeug wirkenden Antriebskraft F zuführbar ist, dass mittels der Recheneinheit aus den Werten der Fahrzeugbeschleunigung a und der am Fahrzeug wirksamen Antriebskraft F sowie der Formel m = F/a die Fahrzeuggesamtmasse m inklusive Zuladung berechenbar ist, und dass aus diesem Wert der Fahrzeuggesamtmasse m abzüglich der Gesamtmasse m_{FA} aller Fahrzeugachsen der zweite Gesamtachslastwert G_{A2} berechenbar ist [G_{A2} = (F/a) - m_{FA}].

Der zur Bestimmung der auf allen Fahrzeugachsen ruhenden gesamten Masse m mittels der Formel m = F/a notwendige Wert der Kraft F lässt sich mittels des Drehmoments des Antriebsmotors des Fahrzeugs feststellen. Das Drehmoment M des Antriebsmotors kann bei modernen Fahrzeugen problemlos per CAN-Bus in Echtzeit aus dem Bordcomputer abgerufen werden, sodass bei Kenntnis der Länge des wirksamen Hebelarms r, insbesondere in Form des halben Durchmessers einer Abtriebswelle, die Kraft gemäß der Gleichung M = F·r beziehungsweise F = M/r berechenbar ist.

Die erfindungsgemäße Vorrichtung ermöglicht demnach mit einer gewissen Ungenauigkeit die Berechnung des zweiten Gesamtachslastwertes G_{A2} mittels Sensoren, welche nicht zu dem Achslastmesssystems gehören. Die hierfür genutzten Sensoren sind ein Beschleunigungssensor, mit dem die Beschleunigung a des Fahrzeugs in Fahrzeuglängsrichtung messbar ist, sowie ein Sensor, mit dem direkt oder indirekt die gerade am Fahrzeug wirksame Antriebskraft messbar ist. Mittels eines solchermaßen berechneten zweiten Gesamtachslastwertes G_{A2} kann ein erster Gesamtachslastwert G_{A1} hinsichtlich seiner Plausibilität überprüft werden, welcher zwar mit einer höheren Genauigkeit mittels des im Fahrzeug vorhandenen Achslastmesssystems bestimmbar ist, jedoch möglicherweise verfälscht ist. Sofern der erste Gesamtachslastwert G_{A1} und der zweite Gesamtachslastwert G_{A2} innerhalb vorgegebener Toleranzwerte übereinstimmen, kann davon ausgegangen werden, dass der von dem fahrzeugeigenen Achslastmesssystem ermittelte erste Gesamtachslastwert G_{A1} korrekt ist.

Sofern jedoch der von dem fahrzeugeigenen Achslastmesssystem ermittelte erste Gesamtachslastwert G_{A1} eine größere Differenz zu dem etwas ungenauer berechneten zweiten Gesamtachslastwert G_{A2} aufweist, könnte dies auf eine Manipulation, einen Fehler, einen Defekt, einen Verschleiß oder dergleichen an der Sensorik des fahrzeugeigenen Achslastmesssystems hinweisen und somit zuverlässig erkannt sowie alsbald behoben werden.

Die genauen Achslastwerte zu einer jeden Fahrzeugachse können für weitere Sicherheitseinrichtungen des Fahrzeugs, wie zum Beispiel ein elektronisches Stabilitätsprogramm, hilfreiche Informationen liefern, wie zum Beispiel eine durch unsachgemäße Beladung veränderte Schwerpunktlage des Fahrzeugs. Die Gesamtachslast oder Summenachslast des Fahrzeugs setzt sich hierbei aus der Summe der einzelnen Achslasten der Fahrzeugachsen zusammen und wird vom Achslastmesssystem üblicherweise als Masse mit der Maßeinheit Kilogramm (kg) oder als Kraft mit der Maßeinheit Newton (N) angegeben.

Die Erfindung betrifft auch eine Variante der gerade geschilderten Vorrichtung. Auch diese Vorrichtung dient zur Plausibilitätsprüfung von mittels einer Sensorik ermittelbaren Messwerten eines Achslastmesssystems, mit dem die auf allen Achsen eines Fahrzeugs ruhende Achslast als ein erster Gesamtachslastwert G_{A1} bestimmbar ist.

Diese Vorrichtung ist dadurch gekennzeichnet, dass diese einen Komparator und eine Recheneinheit aufweist, dass mittels der Recheneinheit durch Addition des ersten Gesamtachslastwerts G_{A1} und des Werts der Gesamtmasse m_{FA} aller Fahrzeugachsen ein erster Fahrzeugmassewert m₁ berechenbar ist (m₁ = G_{A1} + m_{FA}), dass mittels der Recheneinheit aus den Werten der Fahrzeugbeschleunigung a und der am Fahrzeug wirksamen Antriebskraft F sowie der Formel m = F/a ein zweiter Fahrzeugmassewert m₂ inklusive Zuladung berechenbar ist, dass dem Komparator der erste Fahrzeugmassewert m₁ und der zweite Fahrzeugmassewert m₂ zuführbar ist, dass mittels des Komparators ein Vergleich zwischen den beiden Fahrzeugmassewerten m₁, m₂ durchführbar ist, und dass bei einer hinreichend großen Differenz ΔG zwischen dem ersten Fahrzeugmassewert m₁ und dem zweiten Fahrzeugmassewert m₂ mittels des Komparators eine Fehlermeldung erzeugbar und/oder ein Signalgeber aktivierbar ist.

Demnach ist diese Vorrichtungsvariante dazu ausgebildet und vorgesehen, die Fahrzeugmasse m₁, m₂ inklusive Zuladungsmasse zweifach sowie auf unterschiedliche Weise zu ermitteln, und diese Werte anschließend zu vergleichen. Bei einer zu großen Abweichung dieser Werte voneinander ist von der Vorrichtung eine Fehlermeldung ausgebbar, welche eine Überprüfung der Sensorik des Achslastmesssystems empfiehlt.

Gemäß einer ersten Weiterbildung der beschriebenen Vorrichtungen ist vorgesehen, dass die Vorrichtung jeweils einen optischen, akustischen und/oder haptischen Signalgeber zur Ausgabe einer Fehlermeldung aufweist.

Weiter ist bevorzugt vorgesehen, dass die Vorrichtung jeweils eine drahtlos arbeitende Sende- und Empfangseinheit aufweist, mittels welcher die Fehlermeldung an eine drahtlos arbeitende stationäre Sende- und Empfangseinheit sendbar ist, welche mit einem fahrzeugexternen Computer verbunden ist. In diesem fahrzeugexternen Computer ist die Fehlermeldung verarbeitbar und beispielsweise auf einer Anzeigeeinrichtung darstellbar.

Zudem wird es als vorteilhaft beurteilt, wenn vorgesehen ist, dass der Komparator mit einem Ereignisspeicher verbunden ist, in dem solche Fehlermeldungen abspeicherbar und aus dem die Fehlermeldungen wieder abrufbar sind.

Zur Lösung der verfahrensbezogenen Aufgabe wird ein Verfahren zur Plausibilitätsprüfung von mittels einer Sensorik ermittelbaren Messwerten eines Achslastmesssystems beansprucht, mit dem die auf allen Achsen eines Fahrzeugs ruhende Achslast als ein erster Gesamtachslastwert G_{A1} bestimmbar ist. Dieses Verfahren weist die folgenden Verfahrensschritte auf:
a) Ermitteln eines ersten Gesamtachslastwertes G_{A1}, welcher den gemessenen Wert derjenigen Masse angibt, die auf allen Fahrzeugachsen ruht,
b) Berechnen der Fahrzeuggesamtmasse m inklusive Zuladung mit der Formel m = F/a, wobei der Wert a für die aktuelle Fahrzeugbeschleunigung und der Wert F für die aktuell am Fahrzeug wirkende Antriebskraft steht,
c) Berechnen eines zweiten Gesamtachslastwertes G_{A2} mit der Formel G_{A2} = (F/a) - m_{FA}, wobei der Wert m_{FA} für die Gesamtmasse aller berücksichtigten Fahrzeugachsen steht,
d) Vergleichen der beiden Gesamtachslastwerte G_{A1}, G_{A2}, und
e) Erzeugen einer Fehlermeldung, wenn eine hinreichend große Differenz ΔG zwischen dem ersten Gesamtachslastwert G_{A1} und dem zweiten Gesamtachslastwert G_{A2} festgestellt wird.

Demnach wird ein an sich genauer ermittelbarer erster Gesamtachslastwertes G_{A1} auf der Grundlage von Messwerten eines Achslastmesssystems ermittelt. Zur Überprüfung der Richtigkeit des ersten Gesamtachslastwertes G_{A1} wird ein zweiter Gesamtachslastwertes G_{A2} durch eine Berechnung ermittelt, welche ein etwas ungenaueres Ergebnis bringt. Zur Berechnung des zweiten Gesamtachslastwertes G_{A2} wird zunächst die Fahrzeuggesamtmasse m ermittelt, welche auch die Masse des Fahrwerks aller Radachsen des Fahrzeugs enthält. Diese Fahrzeuggesamtmasse m wird mit der Formel m = F/a errechnet, wobei der Wert der auf das Fahrzeug wirkenden Antriebskraft F aus dem aktuellen Wert des Drehmoments M des Antriebsmotors des Fahrzeugs ermittelt werden. Das Drehmoment M des Antriebsmotors kann bei modernen Fahrzeugen problemlos per CAN-Bus in Echtzeit aus dem Bordcomputer abgerufen werden, sodass bei Kenntnis der Länge des wirksamen Hebelarms r, insbesondere in Form des halben Durchmessers einer Abtriebswelle des Antriebsmotors, die Kraft F gemäß der Gleichung M = F·r beziehungsweise F = M/r berechenbar ist. Die Beschleunigung a des Fahrzeugs in Fahrzeuglängsrichtung wird mittels eines Beschleunigungssensors ermittelt. Werte von Beschleunigungssensoren stehen bei modernen Fahrzeugen ebenfalls im CAN-Bus abrufbereit zur Verfügung.

Nachdem mittels der Formel m = F/a die Fahrzeuggesamtmasse m bestimmt wurde, muss von deren Wert nur noch der Wert für die Gesamtmasse m_{FA} aller Fahrwerksteile des Fahrzeugs subtrahiert werden. Dieser an sich konstante Wert ist in einem Speicher des Achslastmesssystems oder in dem erwähnten Komparator abgespeichert und aus diesem abrufbar. Der zweite Gesamtachslastwert G_{A2} ist dann mit der Formel G_{A2} = (F/a) - m_{FA} bestimmbar, wobei der Wert m_{FA} für die Gesamtmasse aller Fahrwerksteile der Fahrzeugachsen steht.

Da nun zwei Werte für die Gesamtachslast des Fahrzeugs zur Verfügung stehen, kann durch einen Vergleich des an sich genauer ermittelten ersten Gesamtachslastwertes G_{A1} mit dem eher ungenaueren zweiten Gesamtachslastwert G_{A2} überprüft werden, ob der erste Gesamtachslastwert G_{A1} plausibel ist oder ob ein Messfehler oder gar eine Manipulation des Achslastmesssystems anzunehmen ist. Wenn bei diesem Vergleich eine hinreichend große Differenz ΔG zwischen dem ersten Gesamtachslastwert G_{A1} und dem zweiten Gesamtachslastwert G_{A2} festgestellt wird, wird der erste Gesamtachslastwert G_{A1} als nicht plausibel erkannt und eine Fehlermeldung erzeugt.

Die Fehlermeldung wird dabei beispielsweise als optisches, akustisches und/oder haptisches Signal ausgegeben. Hierdurch ist für einen Benutzer beziehungsweise einen Fahrer des Fahrzeugs eine eindeutige und unmissverständlich wahrnehmbare Information über eine mögliche Manipulation an dem fahrzeugeigenen Achlastmesssystem und/oder einen Fehler bei der Berechnung des zweiten Gesamtachslastwertes in Echtzeit möglich. Darüber hinaus ist der Benutzer jederzeit über einen Beladungszustand des Fahrzeugs informiert. Der haptische Signalgeber kann beispielsweise mittels eines Vibrationsmotors oder dergleichen realisiert sein.

Die Fehlermeldung kann aber auch an einen fahrzeugexternen Computer drahtlos übermittelt werden. Hierdurch sind beispielsweise ein externes Flottenmanagementsystem, ein Dispositionsbüro, eine Fuhrparkzentrale oder dergleichen in Echtzeit über einen Manipulationsverdacht oder einen anderen Fehler in Kenntnis setzbar.

Zudem kann vorgesehen sein, dass die Fehlermeldung in einem Ereignisspeicher des Fahrzeugs abspeichert wird, sodass diese später beispielsweise in einer Fehlerleiste ausgedruckt werden kann. Infolgedessen ergeben sich weitreichende Dokumentations- und Diagnosemöglichkeiten.

Die gestellte verfahrensbezogene Aufgabe wird zudem mittels einer Verfahrensvariante gelöst. Auch dieses Verfahren dient zur Plausibilitätsprüfung von mittels einer Sensorik ermittelbaren Messwerten eines Achslastmesssystems, mit dem die auf allen Achsen eines Fahrzeugs ruhende Achslast als ein erster Gesamtachslastwert G_{A1} bestimmbar ist, und welches mithilfe einer Vorrichtung mit den oben geschilderten Merkmalen betrieben wird.

Diese Verfahrensvariante weist die folgenden Verfahrensschritte auf:
f) Ermitteln eines ersten Gesamtachslastwertes G_{A1}, welcher den gemessenen Wert derjenigen Masse angibt, die auf allen Fahrzeugachsen ruht,
g) Berechnen eines ersten Fahrzeugmassewertes m₁ inklusive Zuladung durch Addition des erster Gesamtachslastwertes G_{A1} mit dem Wert m_{FA} für die Gesamtmasse aller berücksichtigten Fahrzeugachsen,
h) Berechnen eines zweiten Fahrzeugmassewertes m₂ inklusive Zuladung mit der Formel m = F/a, wobei der Wert a für die aktuelle Fahrzeugbeschleunigung und der Wert F für die aktuell am Fahrzeug wirkende Antriebskraft steht,
i) Vergleichen der beiden Fahrzeugmassewerte m₁ m₂, und
j) Erzeugen einer Fehlermeldung, wenn eine hinreichend große Differenz ΔG zwischen dem ersten Fahrzeugmassewert m₁ und dem zweiten Fahrzeugmassewert m₂ festgestellt wird.

Demnach werden bei dieser Verfahrensvariante zwei auf unterschiedlicher Datenbasis ermittelte Fahrzeugmassewerte m₁, m₂ miteinander verglichen. Diese Fahrzeugmassewerte m₁, m₂ beschreiben die komplette Fahrzeugmasse, also die Masse oder das Gewicht des vollständigen Fahrzeugs 18 plus dessen aktuelle Zuladung. Bei einer hinreichend großen Differenz ΔG zwischen dem ersten Fahrzeugmassewert m₁ und dem zweiten Fahrzeugmassewert m₂ kann eine Fehlermeldung ausgegeben, welche Anlass zur Überprüfung des Messsystems geben soll.

Gemäß einer Ausgestaltung ist vorgesehen, dass dem ersten Gesamtachslastwert G_{A1} oder dem ersten Fahrzeugmassewert m₁ hinsichtlich seiner Bestimmungsgenauigkeit ein erstes Fehlerintervall ΔF₁ von höchstens ± 5 % und dem zweiten Gesamtachslastwert G_{A2} oder dem zweiten Fahrzeugmassewert m₂ ein zweites Fehlerintervall ΔF₂ von höchstens ± 10 % zugewiesen wird. Hierdurch sind die Messunsicherheiten des fahrzeugeigenen Achslastmesssystems und der Berechnung ausreichend bemessen. Hiervon abweichende Fehlerintervalle, insbesondere engere Fehlerintervalle, sind gleichfalls möglich.

Weiter kann vorgesehen sein, dass bei einer Plausibilitätsprüfung des ersten Gesamtachslastwertes G_{A1} eine Fehlermeldung dann ausgegeben wird, wenn der erste Gesamtachslastwert G_{A1} oder der erste Fahrzeugmassewert m₁ außerhalb des zweiten Fehlerintervalls ΔF₂ liegt. Hierdurch ist eine Plausibilitätsprüfung der von dem fahrzeugeigenen Achslastmesssystem gemessenen Achslasten gegeben, sodass etwaige Manipulationen, Verschleiß oder andere Fehler erkennbar sind.

Eine andere Weiterbildung des Verfahrens sieht vor, dass bei einer Plausibilitätsprüfung des zweiten Gesamtachslastwertes G_{A2} oder des zweiten Fahrzeugmassewertes m₂ eine Fehlermeldung dann ausgegeben wird, wenn der zweite Gesamtachslastwert G_{A2} oder der zweite Fahrzeugmassewert m₂ außerhalb eines dritten, noch größeren Fehlerintervalls ΔF₃ liegt, mit beispielsweise ΔF₃ = ΔF₁ ± 10 %. Hierdurch ist eine Überprüfung der mittels der etwas ungenaueren Berechnungsmethodik gewonnenen Achslastwerte mit Hilfe des präziseren fahrzeugeigenen Achslastmesssystems, beispielsweise für eine On-Board-Diagnose, realisierbar.

Schließlich kann in diesem Zusammenhang vorgesehen sein, dass das dritte Fehlerintervall ΔF₃ aus dem ersten Fehlerintervall ΔF₁ zuzüglich des Prozentwertes des zweiten Fehlerintervalls ΔF₂ berechnet wird. Hierdurch ist ein den unterschiedlichen Messungenauigkeiten der Messverfahren angemessenes drittes Fehlerintervall gegeben.

Zum besseren Verständnis der Erfindung ist der Beschreibung eine Zeichnung beigefügt. In der Zeichnung zeigt
Fig. 1 ein vereinfachtes Blockschaltbild einer Vorrichtung mit den Merkmalen der Erfindung, und
Fig. 2 eine grafische Darstellung von Fehlerintervallen für eine Plausibilitätsermittlung eines gemessenen Gesamtachslastwertes.

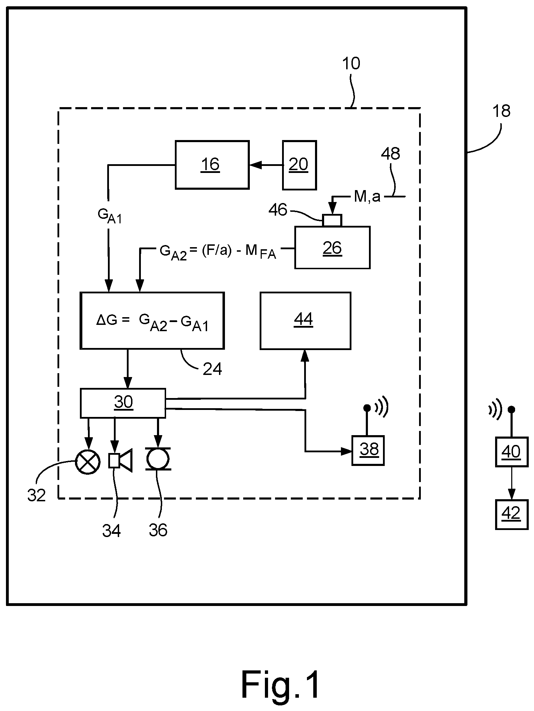

Die in Fig. 1 dargestellte Vorrichtung 10 zur Plausibilitätsprüfung von Messwerten eines an sich bekannten fahrzeugeigenen Achslastmesssystems 16 eines Fahrzeugs 18 kann beispielsweise in einem Bremssteuergerät eines Kraftfahrzeugs integriert sein. Die nachfolgend genannten Komponenten können dabei als Schaltungen und/oder als Software-Module in das Bremssteuergerät intergiert sein.

Die Vorrichtung 10 weist zunächst einen Komparator 24 sowie eine Recheneinheit 26 auf. Bei dem Fahrzeug 18 kann es sich beispielsweise um ein Personenfahrzeug, einen Lastkraftwagen, eine Zugmaschine, einen Sattelauflieger und/oder ein Anhängefahrzeug handeln. Unter den Begriff Fahrzeug wird auch eine Zugmaschine mit einem Sattelauflieger und ein Lastkraftwagen mit mindestens einem Anhängefahrzeug verstanden.

Mittels des erwähnten fahrzeugeigenen und konventionell ausgebildeten Achslastmesssystems 16 ist ein erster Gesamtachslastwert G_{A1} mithilfe einer zugeordneten Sensorik 20 durch Messungen ermittelbar. Dieser erste Gesamtachslastwert G_{A1} ist gebildet in Abhängigkeit von einer Zahl der Achsen des Fahrzeugs, und ist daher additiv aus der Summe der Achslastmesswerte der einzelnen Achsen zusammensetzt. Dieser von dem Achslastmesssystem 16 ermittelte erste Gesamtachslastwert G_{A1} kann zum Beispiel als Masse in der Maßeinheit Kilogramm (kg) und/oder als Kraft in der Maßeinheit Newton (N) ausgegeben und/oder zwischengespeichert werden.

Bei einem Fahrzeug 18 mit einer elektronisch gesteuerten Luftfederung kann die Ermittlung der Gesamtachslast des Fahrzeugs zum Beispiel durch die Messung der Luftdrücke in den einzelnen Luftfederbälgen erfolgen. Mittels der Luftdruckwerte lässt sich in bekannter Weise die auf den jeweiligen Luftfederbalg wirkende Last oder Kraft berechnen. Alternativ dazu kann die Gesamtachslast des Fahrzeugs durch Messung der ladungsbedingt unterschiedlichen Einfederwege des Fahrzeug-Chassis in Bezug zu den Fahrzeugachsen mit Hilfe von Wegmesssensoren oder Drehwinkelsensoren ermittelt werden. Hierzu wird beispielsweise ein Übertragungsgestänge zur mechanischen Kopplung zwischen der jeweiligen Fahrzeugachse und dem Fahrzeug-Chassis genutzt, an dem ein solcher Sensor angeordnet ist. Bei einer Beladung des Fahrzeugs bewegt sich das Fahrzeug-Chassis in Richtung zur Fahrzeugachse, wodurch das Übertragungsgestänge ausgelenkt wird. Diese Auslenkung ist mittels des genannten Wegmesssensors oder Drehwinkelsensors messbar und in eine Kraft oder Achslast umrechenbar. Auf diese Weise ermittelt das konventionell ausgebildete Achslastmesssystem 16 die jeweiligen Achslasten an einer jeden Fahrzeugachse sowie als Summe dieser Achslasten den ersten Gesamtachslastwert G_{A1}.

Mittels der Recheneinheit 26 ist ein zweiter Gesamtachslastwert G_{A2} ermittelbar. Hierzu wird von der Recheneinheit 26 zunächst mit der Formel F = m·a beziehungsweise m = F/a die Gesamtmasse m des Fahrzeugs 18 berechnet. Der Wert einer aktuellen Beschleunigung a des Fahrzeugs ist, neben einer Vielzahl von anderen fahrdynamischen Daten wie Wegstrecke, Geschwindigkeit, Antriebsdrehmoment, Steigung und Wetterbedingungen, bei modernen Fahrzeugen problemlos über den CAN-Bus 48 aus einem Bordcomputer von der Recheneinheit 26 abrufbar. Der Wert der auf das Fahrzeug 18 wirkenden Antriebskraft F kann von der Recheneinheit 26 aus dem aktuellen Wert des Drehmoments M einer Abtriebswelle des Antriebsmotors des Fahrzeugs 18 ermittelt werden. Der Wert des aktuellen Drehmoments M des Antriebsmotors kann ebenfalls per CAN-Bus 48 aus dem Bordcomputer des Fahrzeugs 18 abgerufen werden, sodass bei Kenntnis der Länge des wirksamen Hebelarms r, insbesondere in Form des halben Durchmessers der Abtriebswelle des Antriebsmotors, die Kraft F gemäß der Formel M = F·r beziehungsweise F = M/r berechenbar ist. Somit ist die Gesamtmasse m des Fahrzeugs 18 von der Recheneinheit 26 zumindest während der Fahrt des Fahrzeugs 18 jederzeit indirekt ermittelbar. Von dieser Gesamtmasse m des Fahrzeugs 18 wird anschließend die Gesamtmasse m_{FA} aller Fahrzeugachsen subtrahiert und dadurch ein zweiter Gesamtachslastwert G_{A2} berechnet.

Anschließend werden im Komparator 24 der messtechnisch ermittelte erste Gesamtachslastwert G_{A1} und der indirekt ermittelte zweite Gesamtachslastwert G_{A2} miteinander verglichen. Bei diesem Vergleich werden die beiden Gesamtachslastwerte G_{A1}, G_{A2} einer Subtraktion unterzogen, sodass als Differenz ΔG ein Wert erhalten wird, welcher angibt, wie stark diese beiden Gesamtachslastwerte G_{A1}, G_{A2} voneinander abweichen. Eine hinreichend große Differenz ΔG zwischen den beiden Gesamtachslastwerten G_{A1}, G_{A2} wird als Hinweis auf eine etwaige Manipulation oder einen systematischen Messfehler des Komparators 24 eine Fehlermeldung 30 bewertet.

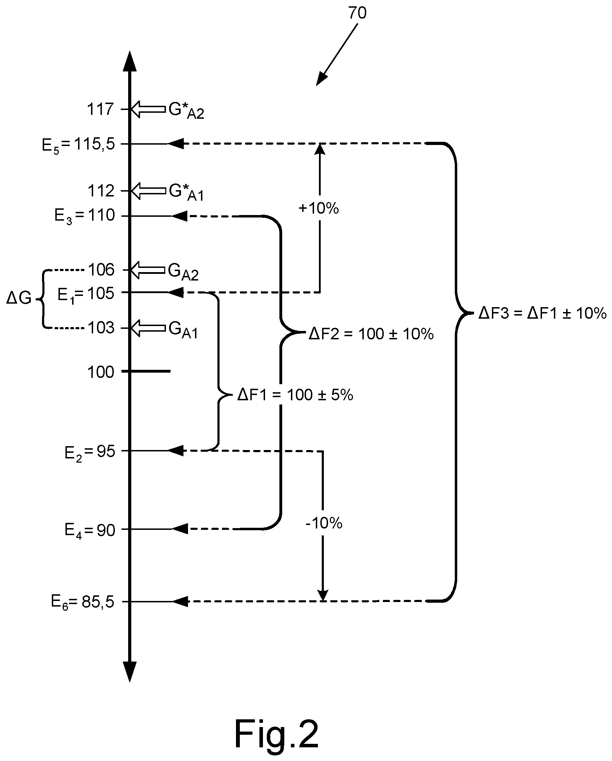

Die Vorrichtung 10 kann zunächst dazu dienen, eine Plausibilitätsprüfung des von dem fahrzeugeigenen, eigentlich hinreichend genauen Achslastmesssystem 16 gelieferten ersten Gesamtachslastwerts G_{A1} anhand des zweiten Gesamtachslastwertes G_{A2} vorzunehmen. In einer solchen Konstellation wird eine Fehlermeldung 30 beziehungsweise ein Fehlersignal von dem Komparator 24 ausgegeben, wenn der erste Gesamtachslastwert außerhalb des zweiten Fehlerintervalls ΔF₂ liegt. Dies ist in der Fig. 2 mit dem durch ein Sternchen (*) markierten Gesamtachslastwert G*_{A1} = 112 veranschaulicht.

Das Vorliegen einer Fehlermeldung 30 deutet darauf hin, dass eine unzulässige Manipulation des fahrzeugeigenen Achslastmesssystems 16, ein Defekt oder dergleichen vorliegt. Eine unzulässige Manipulation kann zum Beispiel durch das Verformen eines Übertragungsgestänges oder das Vorsehen eines Druckminderers an einem Drucksensor einer Luftfeder eines Achslastmesssystems eines luftgefederten Fahrzeugs erfolgen. Außerdem können verschleißbedingte Defekte, Umgebungseinflüsse oder Softwarefehler auftreten, welche zu systematischen Messfehlern oder Auswertefehlern führen.

Umgekehrt kann die Vorrichtung 10 auch dazu eingesetzt werden, den berechneten zweiten Gesamtachslastwert G_{A2} mittels des vom fahrzeugeigenen, in der Regel genaueren Achslastmesssystems 16 gemessenen ersten Gesamtachslastwerts G_{A1} zu überprüfen. In einer solchen Konstellation wird eine Fehlermeldung 30 ausgegeben, wenn der zweite Gesamtachslastwert G_{A2} außerhalb eines dritten Fehlerintervalls ΔF₃ liegt. Dies ist in der Fig. 2 mit dem durch ein Sternchen (*) als fehlerhaft markierten Gesamtachslastwert G*_{A2} = 117 veranschaulicht. Der Wert dieses dritten Fehlerintervalls ΔF₃ ist aus dem Wert des ersten Fehlerintervalls ΔF₁ zuzüglich des Werts des zweiten Fehlerintervalls ΔF₂ berechnet. Er beträgt (± 5 %) + (± 10 %) = ± 15 %. Hinsichtlich der weiteren Einzelheiten zu den hier nur kurz erwähnten Fehlerintervallen ΔF₁, ΔF₂, ΔF₃ als Grenzwerte für die Ausgabe einer Fehlermeldung 30 durch die Vorrichtung 10 wird auf die noch folgende eingehendere Beschreibung der Fig. 2 verwiesen.

Die erwähnte Fehlermeldung 30 ist vorzugsweise mittels eines optischen Signalgebers 32, wie einer Signal-LED oder einem Hinweissymbol auf einem Display des Fahrzeugs oder eines elektronischen Mobilgeräts, zumindest einem Benutzer beziehungsweise Fahrer des Fahrzeugs 18 zur Anzeige bringbar. Alternativ oder ergänzend dazu kann ein akustischer Signalgeber 34, wie ein Lautsprecher, Piezosummer und/oder ein haptischer Signalgeber 36, wie ein Vibrationsmotor, ein Exzenter, Rüttler oder dergleichen, vorgesehen sein. Der haptische Signalgeber 36 kann in einen Fahrersitz, in das Lenkrad, einen Gangwählhebel oder dergleichen integriert sein, um bei anstehender Fehlermeldung 30 dem Benutzer das Weiterverfahren auf eine möglichst intuitiv wahrnehmbare Art und Weise unangenehm zu gestalten.

Darüber hinaus kann die Fehlermeldung 30 mittels einer bevorzugt drahtlosen Sende- und Empfangseinheit 38 über eine fahrzeugexterne Sende- und Empfangseinheit 40 einem fahrzeugexternen Computer 42 übermittelbar sein. So ist es beispielsweise möglich, die Fehlermeldung 30 an ein zentrales Flottenmanagementsystem, ein Dispositionsbüro einer Spedition, eine Fuhrparkzentrale oder dergleichen zu senden. Dies kann auch durch einen so genannten stillen Alarm ohne Kenntnis des Benutzers des Fahrzeugs 18 erfolgen. Die drahtlose Sende- und Empfangseinheit 38 kann einen Funkstandard mit einer möglichst hohen Reichweite und Flächenabdeckung, wie zum Beispiel Mobilfunk, Satellitenfunk oder dergleichen verwenden, um eine geographisch weitreichende Weitergabe der Fehlermeldung 30 zu ermöglichen.

Im Empfangsmodus der fahrzeuggebundenen Sende- und Empfangseinheit 38 kann diese ein von der stationären Sende- und Empfangseinheit 40 gesendetes Steuersignal empfangen, um beispielsweise das Weiterfahren des Fahrzeugs 18 bei einer weiterhin anstehenden Fehlermeldung 30 betreffend des Achslastmesssystems 16 ähnlich wie eine Wegfahrsperre zu erschweren oder ganz zu unterbinden.

Außerdem verfügt die Vorrichtung 10 über einen manipulationssicheren Ereignisspeicher 44, in dem die mindestens eine Fehlermeldung 30 dauerhaft abspeicherbar ist. Der Ereignisspeicher 44 ist anlässlich einer Sicherheitsüberprüfung, einer Wartung, einer polizeilichen Verkehrskontrolle, einer Zollkontrolle oder dergleichen nur durch autorisierte Personen auslesbar. Der Ereignisspeicher 44 kann zudem neben Fahrzeugdaten, wie dem Gesamtachslastwert, auch einzelne Achslastwerte, Fahrstrecke, Geschwindigkeit, Beschleunigung, Antriebsleistung, Drehmoment, Steigung der Fahrstrecke, Höhenprofil der Fahrstrecke, Wetterdaten einschließlich Luftdruck, Verkehrsdaten sowie eine Position, beispielsweise GPS-Position, des Fahrzeugs 18 und darüber hinaus gehende Informationen enthalten. Diese Daten sind im Ereignisspeicher 44 bevorzugt in gleichmäßigen Zeitintervallen mit einem jeweils zugeordneten elektronischen Zeit- und Datumsstempel abgelegt.

Um das Auslesen des Ereignisspeichers 44 zu ermöglichen, ist dieser mit einer geeigneten universellen Schnittstelle 46 für einen CAN-Bus 48 und/oder einer bidirektionalen drahtlosen Schnittstelle, wie Bluetooth^{®}, etc. ausgerüstet. Unter anderem über diese Schnittstelle 46 sind sämtliche im Ereignisspeicher 44 ablegten Daten von einer autorisierten Person mit Hilfe eines geeigneten Lesegeräts auslesbar. Die Daten im Ereignisspeicher 44 sind zuverlässig gegen Manipulationen und unberechtigte Zugriffe bevorzugt durch eine Verschlüsselung und/oder ein Passwort gesichert. Außerdem ist der Ereignisspeicher 44 mechanisch gegen Unfälle und Stromausfall gesichert, also crashsicher ausgebildet.

Der Komparator 24, die Recheneinheit 26, der Ereignisspeicher 44 sowie die bevorzugt kombiniert ausgebildete fahrzeuggebundene Sende- und Empfangseinheit 38 der Vorrichtung 10 können gegebenenfalls jeweils als hardwaremäßige und/oder softwaremäßige Komponenten des nicht dargestellten fahrzeugeigenen Bordrechners des Fahrzeugs 18 oder des fahrzeugeigenen Achslastmesssystems 16 ausgebildet sein.

Die Fig. 2 veranschaulicht in einer grafischen Darstellung 70 anhand eines lediglich beispielhaft gewählten Zahlenwerts von 100 die relative Lage und die Größe der drei schon erwähnten Fehlerintervalle ΔF₁, ΔF₂, ΔF₃. Der Begriff Prozentwert beträgt im Kontext des hier gewählten Beispiels entweder höchstens ± 5 % oder höchstens ± 15 %. Die Fehlerintervalle ΔF₁, ΔF₂, ΔF₃ können gegebenenfalls auf einen Prozentwert bis herab zu ± 0,1 % reduziert sein, welches bei einem Fahrzeug 10 mit einer Gesamtmasse von 40000 kg einer Messunsicherheit von etwa ± 40 kg entspricht.

Das erste Fehlerintervall ΔF₁ des durch sensorische Messung ermittelten ersten Gesamtachslastwertes G_{A1} mit einem Prozentwert von höchstens ± 5 % erstreckt sich von einem oberen Endwert E₁ = 105 bis zu einem unteren Endwert E₂ = 95. Das zweite Fehlerintervall ΔF₂ des durch Berechnung indirekt ermittelten zweiten Gesamtachslastwertes ΔG_{A2} mit einem Prozentwert von höchstens ± 10 % erstreckt sich ausgehend von einem oberen Endwert E₃ = 110 bis zu einem unteren Endwert E₄ = 90, jeweils einschließlich der Endwerte E₁,...,E₄ beziehungsweise einschließlich der Grenzen der jeweiligen Fehlerintervalle ΔF₁, ΔF₂. Das dritte Fehlerintervall ΔF₃ ergibt sich aus dem ersten Fehlerintervall ΔF₁ zuzüglich des Prozentwertes von höchstens ± 10 % des zweiten Fehlerintervalls ΔF₂. Demnach beträgt der obere Endwert Es des dritten Fehlerintervalls ΔF₃ gemäß der Beziehung E₅ = E₁ (105) + 10 % = 115,5. Der untere Endwert E₆ des dritten Fehlerintervalls ΔF₃ beträgt gemäß der Beziehung demnach E₆ = E₂ (95) - 10 % = 85,5.

Bei einer ersten Plausibilitätsüberprüfung der Werte des fahrzeugeigenen Achslastmesssystems 16 gibt die Vorrichtung 10 mit den hier lediglich exemplarisch angeführten Zahlenwerten keine Fehlermeldung aus, weil der mittels sensorischer Messungen ermittelte erste Gesamtachslastwert G_{A1} innerhalb des ersten Fehlerintervalls ΔF₁ und der indirekt ermittelte zweite Gesamtachslastwert G_{A2} innerhalb des zweiten Fehlerintervalls ΔF₂ liegt. Dies ist in Fig. 2 durch den ersten Gesamtachslastwert G_{A1} = 103 und den zweiten Gesamtachslastwert G_{A2} = 106 dargestellt. Zudem ist die Differenz ΔG zwischen dem ersten Gesamtachslastwert G_{A1} und dem zweiten Gesamtachslastwert G_{A2} sehr gering (ΔG = 106 - 103 = 3), weshalb davon ausgegangen wird, dass der mittels Messungen des Achslastmesssystems 16 ermittelte erste Gesamtachslastwert G_{A1} korrekt ist.

Bei einer zweiten Plausibilitätsüberprüfung der Werte des fahrzeugeigenen Achslastmesssystems 16 gibt die Vorrichtung 10 mit den hier genutzten Zahlenwerten eine Fehlermeldung 30 aus, wenn der mit dem fahrzeugeigenen Achslastmesssystem 16 durch Messungen ermittelte erste Gesamtachslastwert G_{A1} außerhalb des zweiten Fehlerintervalls ΔF₂ des zweiten Gesamtachslastwertes G_{A2} liegt. Dieser Fall ist in der Fig. 2 durch den Gesamtachslastwert G*_{A1} = 112 veranschaulicht.

Umgekehrt ist auch eine Plausibilitätsprüfung des indirekt ermittelten zweiten Gesamtachslastwertes G_{A2} durch den mittels sensorischer Messungen ermittelten ersten Gesamtachslastwert G_{A1} möglich. In diesem Fall erfolgt die Ausgabe der Fehlermeldung 30 durch die Vorrichtung 10, wenn der zweite Gesamtachslastwert G_{A2} außerhalb des dritten Fehlerintervalls ΔF₃ liegt, welches in der Fig. 2 mit dem zweiten Gesamtachslastwert G*_{A2} = 117 veranschaulicht ist.

Gemäß dem die Merkmale der Erfindung aufweisenden Verfahren werden mit Hilfe der Vorrichtung 10 demnach folgende Verfahrensschritte nacheinander ausgeführt:
a) Ermitteln eines ersten Gesamtachslastwertes G_{A1}, welcher den Wert der gesamten Masse m angibt, die auf allen Fahrzeugachsen ruht,
b) Berechnen der Masse m des gesamten Fahrzeugs mit der Formel m = F/a, wobei der Wert a für die aktuelle Fahrzeugbeschleunigung und der Wert F für die aktuell am Fahrzeug 18 wirkenden Antriebskraft steht,
c) Berechnen eines zweiten Gesamtachslastwertes G_{A2} mit der Formel G_{A2} = (F/a) - m_{FA}, wobei der Wert m_{FA} für die Gesamtmasse aller berücksichtigten Fahrzeugachsen steht,
d) Vergleichen der beiden Gesamtachslastwerte G_{A1}, G_{A2}, und
e) Erzeugen einer Fehlermeldung 30, wenn eine hinreichend große Differenz ΔG zwischen dem ersten Gesamtachslastwert G_{A1} und dem zweiten Gesamtachslastwert G_{A2} festgestellt wird.

Die Ausgabe der Fehlermeldung 30 erfolgt verfahrensgemäß anhand einer Bewertung unter Berücksichtigung der drei Fehlerintervalle ΔF₁, ΔF₂, ΔF₃ und der Gesamtachslastwerte G_{A1}, G_{A2} wie weiter oben bereits erläutert.

### Bezugszeichenliste (Teil der Beschreibung)

- 10: Vorrichtung
- 16: Achslastmesssystem des Fahrzeugs
- 18: Fahrzeug
- 20: Sensorik des Achslastmesssystems
- 24: Komparator
- 26: Recheneinheit
- 30: Fehlermeldung
- 32: Optischer Signalgeber
- 34: Akustischer Signalgeber
- 36: Haptischer Signalgeber
- 38: Sende- und Empfangseinheit am Fahrzeug
- 40: Stationäre Sende- und Empfangseinheit
- 42: Fahrzeugexterner Computer
- 44: Ereignisspeicher
- 46: Schnittstelle, CAN-Bus
- 48: CAN-Bus
- 70: Grafische Darstellung
- a: Beschleunigung des Fahrzeugs
- E₁,...,E₆: Endwerte der Fehlerintervalle
- F: Kraft, Antriebskraft
- ΔF₁: Erstes Fehlerintervall
- ΔF₂: Zweites Fehlerintervall
- ΔF₃: Drittes Fehlerintervall
- G_{A1}: Erste Gesamtachslastwert
- G*_{A1}: Fehlerhafter erster Gesamtachslastwert
- G_{A2}: Zweiter Gesamtachslastwert
- G*_{A2}: Fehlerhafter zweiter Gesamtachslastwert
- ΔG: Differenz zwischen den Gesamtachslastwerten G_{A1}, G_{A2}
- m: Fahrzeuggesamtmasse inklusive Zuladung
- m₁: Erster Fahrzeugmassewert
- m₂: Zweiter Fahrzeugmassewert
- m_{FA}: Gesamtmasse aller Fahrzeugachsen
- M: Drehmoment einer Abtriebswelle eines Fahrzeugmotors
- r: Radius einer Abtriebswelle eines Fahrzeugmotors

## Patentansprüche

1. Vorrichtung (10) zur Plausibilitätsprüfung von mittels einer Sensorik (20) ermittelbaren Messwerten eines Achslastmesssystems (16),
wobei mit dem Achslastmesssystem (16) die auf allen Achsen eines Fahrzeugs (18) ruhende Achslast als ein erster Gesamtachslastwert (G_{A1}) bestimmbar ist,
wobei die Vorrichtung (10) einen Komparator (24) und eine Recheneinheit (26) aufweist,
wobei mittels der Recheneinheit (26) ein zweiter Gesamtachslastwert (G_{A2}) berechenbar ist,
wobei dem Komparator (24) der erste Gesamtachslastwert (G_{A1}) und der zweite Gesamtachslastwert (G_{A2}) zuführbar ist,
wobei mittels des Komparators (24) ein Vergleich zwischen den beiden Gesamtachslastwerten (G_{A1}, G_{A2}) durchführbar ist, und
wobei bei einer hinreichend großen Differenz (ΔG) zwischen dem ersten Gesamtachslastwert (G_{A1}) und dem zweiten Gesamtachslastwert (G_{A2}) mittels des Komparators (24) eine Fehlermeldung (30) erzeugbar und/oder ein Signalgeber (32, 34, 36) aktivierbar ist,
**dadurch gekennzeichnet, dass**
der Recheneinheit (26) der aktuelle Wert der Fahrzeugbeschleunigung (a) sowie der aktuelle Wert der an dem Fahrzeug (18) wirkenden Antriebskraft (F) zuführbar sind, dass mittels der Recheneinheit (26) aus den Werten der Fahrzeugbeschleunigung (a) und der am Fahrzeug (18) wirksamen Antriebskraft (F) sowie der Formel m = F/a die Fahrzeuggesamtmasse (m) inklusive Zuladung berechenbar ist, und dass aus diesem Wert der Fahrzeuggesamtmasse (m) abzüglich der Gesamtmasse (m_{FA}) aller Fahrzeugachsen der zweite Gesamtachslastwert (G_{A2}) berechenbar ist [G_{A2} = (F/a) - m_{FA}].

2. Vorrichtung (10) zur Plausibilitätsprüfung von mittels einer Sensorik (20) ermittelbaren Messwerten eines Achslastmesssystems (16), wobei mit dem Achslastmesssystem (16) die auf allen Achsen eines Fahrzeugs (18) ruhende Achslast als ein erster Gesamtachslastwert (G_{A1}) bestimmbar ist,
wobei die Vorrichtung (10) einen Komparator (24) und eine Recheneinheit (26) aufweist,
**dadurch gekennzeichnet, dass**
mittels der Recheneinheit (26) durch Addition von dem ersten Gesamtachslastwert (G_{A1}) und dem Wert der Gesamtmasse (m_{FA}) aller Fahrzeugachsen ein erster Fahrzeugmassewert (m₁) berechenbar ist (m₁ = G_{A1} + M_{FA}),
dass mittels der Recheneinheit (26) aus den Werten der Fahrzeugbeschleunigung (a) und der am Fahrzeug (18) wirksamen Antriebskraft (F) sowie der Formel m = F/a ein zweiter Fahrzeugmassewert (m₂) inklusive Zuladung berechenbar ist,
dass dem Komparator (24) der erste Fahrzeugmassewert (m₁) und der zweite Fahrzeugmassewert (m₂) zuführbar ist,
dass mittels des Komparators (24) ein Vergleich zwischen den beiden Fahrzeugmassewerten (m₁, m₂) durchführbar ist, und
dass bei einer hinreichend großen Differenz (ΔG) zwischen dem ersten Fahrzeugmassewert (m₁) und dem zweiten Fahrzeugmassewert (m₂) mittels des Komparators (24) eine Fehlermeldung (30) erzeugbar und/oder ein Signalgeber (32, 34, 36) aktivierbar ist.

3. Vorrichtung nach einem der Ansprüche 1 oder 2, **dadurch gekennzeichnet, dass** die Vorrichtung (10) einen optischen, akustischen und/oder haptischen Signalgeber (32, 34, 36) zur Ausgabe einer Fehlermeldung (30) aufweist.

4. Vorrichtung nach einem der Ansprüche 1 bis 3, **dadurch gekennzeichnet, dass** die Vorrichtung (10) eine drahtlos arbeitende Sende- und Empfangseinheit (38) aufweist, mittels welcher die Fehlermeldung (30) an eine drahtlos arbeitende stationäre Sende- und Empfangseinheit (40) sendbar ist, welche mit einem fahrzeugexternen Computer (42) verbunden ist.

5. Vorrichtung einem der Ansprüche 1 bis 4, **dadurch gekennzeichnet, dass** der Komparator (24) mit einem Ereignisspeicher (44) verbunden ist, in dem die Fehlermeldung (30) abspeicherbar und aus dem die Fehlermeldung (30) wieder abrufbar ist.

6. Verfahren zur Plausibilitätsprüfung von mittels einer Sensorik (20) ermittelbaren Messwerten eines Achslastmesssystems (16), mit dem die auf allen Achsen eines Fahrzeugs (18) ruhende Achslast als ein erster Gesamtachslastwert (G_{A1}) bestimmbar ist, insbesondere mittels einer Vorrichtung (10) gemäß mindestens einem der Ansprüche 1 bis 5, aufweisend die folgenden Verfahrensschritte:
a) Ermitteln eines ersten Gesamtachslastwertes (G_{A1}), welcher den gemessenen Wert derjenigen Masse angibt, die auf allen Fahrzeugachsen ruht,
b) Berechnen der Fahrzeuggesamtmasse (m) inklusive Zuladung mit der Formel m = F/a, wobei der Wert (a) für die aktuelle Fahrzeugbeschleunigung und der Wert (F) für die aktuell am Fahrzeug (18) wirkende Antriebskraft steht,
c) Berechnen eines zweiten Gesamtachslastwertes (G_{A2}) mit der Formel G_{A2} = (F/a) - m_{FA}, wobei der Wert m_{FA} für die Gesamtmasse aller berücksichtigten Fahrzeugachsen steht,
d) Vergleichen der beiden Gesamtachslastwerte (G_{A1}, G_{A2}), und
e) Erzeugen einer Fehlermeldung (30), wenn eine hinreichend große Differenz (ΔG) zwischen dem ersten Gesamtachslastwert (G_{A1}) und dem zweiten Gesamtachslastwert (G_{A2}) festgestellt wird.

7. Verfahren zur Plausibilitätsprüfung von mittels einer Sensorik (20) ermittelbaren Messwerten eines Achslastmesssystems (16), mit dem die auf allen Achsen eines Fahrzeugs (18) ruhende Achslast als ein erster Gesamtachslastwert (G_{A1}) bestimmbar ist, insbesondere mittels einer Vorrichtung (10) gemäß mindestens einem der Ansprüche 1 bis 5, aufweisend die folgenden Verfahrensschritte:
f) Ermitteln eines ersten Gesamtachslastwertes (G_{A1}), welcher den gemessenen Wert derjenigen Masse angibt, die auf allen Fahrzeugachsen ruht,
g) Berechnen eines ersten Fahrzeugmassewertes (m₁) inklusive Zuladung durch Addition des erster Gesamtachslastwertes (G_{A1}) mit dem Wert (m_{FA}) für die Gesamtmasse aller berücksichtigten Fahrzeugachsen,
h) Berechnen eines zweiten Fahrzeugmassewertes (m₂) inklusive Zuladung mit der Formel m = F/a, wobei der Wert (a) für die aktuelle Fahrzeugbeschleunigung und der Wert (F) für die aktuell am Fahrzeug (18) wirkende Antriebskraft steht,
i) Vergleichen der beiden Fahrzeugmassewerte (m₁, m₂), und
j) Erzeugen einer Fehlermeldung (30), wenn eine hinreichend große Differenz (ΔG) zwischen dem ersten Fahrzeugmassewert (m₁) und dem zweiten Fahrzeugmassewert (m₂) festgestellt wird.

8. Verfahren nach Anspruch 6 oder 7, **dadurch gekennzeichnet, dass** dem ersten Gesamtachslastwert (G_{A1}) oder dem ersten Fahrzeugmassewert (m₁) ein erstes Fehlerintervall (ΔF₁) von höchstens ± 5 % und dem zweiten Gesamtachslastwert (G_{A2}) oder dem zweiten Fahrzeugmassewert (m₂) ein zweites Fehlerintervall (ΔF₂) von höchstens ± 10 % zugewiesen wird.

9. Verfahren nach Anspruch 8, **dadurch gekennzeichnet, dass** bei einer Plausibilitätsprüfung des ersten Gesamtachslastwertes (G_{A1}) oder des ersten Fahrzeugmassewertes (m₁) eine Fehlermeldung (30) ausgegeben wird, wenn der erste Gesamtachslastwert (G_{A1}) oder der ersten Fahrzeugmassewert (m₁) außerhalb des zweiten Fehlerintervalls (ΔF₂) liegt.

10. Verfahren nach einem der Ansprüche 6 bis 9, **dadurch gekennzeichnet, dass** bei einer Plausibilitätsprüfung des zweiten Gesamtachslastwertes (G_{A2}) oder des zweiten Fahrzeugmassewertes (m₂) eine Fehlermeldung (30) ausgegeben wird, wenn der zweite Gesamtachslastwert (G_{A2}) oder der Fahrzeugmassewert (m₂) außerhalb eines dritten Fehlerintervalls (ΔF₃) liegt.

11. Verfahren nach Anspruch 10, **dadurch gekennzeichnet, dass** das dritte Fehlerintervall (ΔF₃) aus dem Wert des ersten Fehlerintervalls (ΔF₁) zuzüglich des Werts des zweiten Fehlerintervalls (ΔF₂) berechnet wird.

12. Verfahren nach einem der Ansprüche 6 bis 11, **dadurch gekennzeichnet, dass** die Fehlermeldung (30) als optisches, akustisches und/oder haptisches Signal ausgegeben wird.

13. Verfahren nach einem der Ansprüche 6 bis 12, **dadurch gekennzeichnet, dass** die Fehlermeldung (30) an einen fahrzeugexternen Computer (42) drahtlos übermittelt wird.

14. Verfahren nach einem der Ansprüche 7 bis 13, **dadurch gekennzeichnet, dass** die Fehlermeldung (30) in einem Ereignisspeicher (44) des Fahrzeugs (18) abspeichert wird.

## Claims

1. Device (10) for the plausibility check of measured values of an axle load measuring system (16), which values can be determined using a sensor system (20),
wherein the axle load resting on all axles of a vehicle (18) can be determined as a first total axle load value (G_{A1}) using the axle load measuring system (16),
wherein the device (10) has a comparator (24) and a computing unit (26),
wherein a second total axle load value (G_{A2}) can be calculated using the computing unit (26),
wherein the first total axle load value (G_{A1}) and the second total axle load value (G_{A2}) can be supplied to the comparator (24),
wherein a comparison between the two total axle load values (G_{A1}, G_{A2}) can be performed using the comparator (24), and
wherein, with a sufficiently large difference (ΔG) between the first total axle load value (G_{A1}) and the second total axle load value (G_{A2}), an error message (30) can be generated and/or a signal generator (32, 34, 36) can be activated using the comparator (24),
**characterized in that** the current value of the vehicle acceleration (a) and the current value of the driving force (F) acting on the vehicle (18) can be supplied to the computing unit (26), **in that** the total vehicle mass (m) including payload can be calculated using the computing unit (26) from the values of the vehicle acceleration (a) and the driving force (F) acting on the vehicle (18) and the formula m = F/a **and in that** from this value of the total vehicle mass (m) minus the total mass (m_{FA}) of all vehicle axles the second total axle load value (G_{A2}) can be calculated [G_{A2} = (F/a)-m_{FA}].

2. Device (10) for the plausibility check of measured values of an axle load measuring system (16), which values can be determined using a sensor system (20), wherein the axle load resting on all axles of a vehicle (18) can be determined as a first total axle load value (G_{A1}) using the axle load measuring system (16),
wherein the device (10) has a comparator (24) and a computing unit (26),
**characterized in that** by adding the first total axle load value (G_{A1}) and the value of the total mass (m_{FA}) of all vehicle axles a first vehicle mass value (m₁) can be calculated (m₁ = G_{A1} + m_{FA}) using the computing unit (26),
**in that** a second vehicle mass value (m₂) including payload can be calculated using the computing unit (26) from the values of the vehicle acceleration (a) and the driving force (F) acting on the vehicle (18) and the formula m = F/a,
**in that** the first vehicle mass value (m₁) and the second vehicle mass value (m₂) can be supplied to the comparator (24),
**in that** a comparison between the two vehicle mass values (m₁, m₂) can be performed using the comparator (24), and
**in that,** with a sufficiently large difference (ΔG) between the first vehicle mass value (m₁) and the second vehicle mass value (m₂), an error message (30) can be generated and/or a signal generator (32, 34, 36) can be activated using the comparator (24).

3. Device according to any of claims 1 or 2, **characterized in that** the device (10) has an optical, acoustic and/or haptic signal generator (32, 34, 36) for issuing an error message (30).

4. Device according to any of claims 1 to 3, **characterized in that** the device (10) has a wireless transmitting and receiving unit (38) by means of which the error message (30) can be sent to a wireless stationary transmitting and receiving unit (40) which is connected to a vehicle-external computer (42).

5. Device according to any of claims 1 to 4, **characterized in that** the comparator (24) is connected to an event memory (44) in which the error message (30) can be stored and from which the error message (30) can be retrieved.

6. Method for the plausibility check of measured values of an axle load measuring system (16), which values can be determined using a sensor system (20), with which measuring system the axle load resting on all axles of a vehicle (18) can be determined as a first total axle load value (G_{A1}), in particular using a device (10) according to at least one of claims 1 to 5, comprising the following method steps:
a) determining a first total axle load value (G_{A1}), which indicates the measured value of the mass resting on all vehicle axles,
b) calculating the total vehicle mass (m) including payload using the formula m = F/a, where the value (a) represents the current vehicle acceleration and the value (F) represents the current driving force acting on the vehicle (18),
c) calculating a second total axle load value (G_{A2}) using the formula G_{A2} = (F/a) - m_{FA}, where the value m_{FA} represents the total mass of all vehicle axles taken into consideration,
d) comparing the two total axle load values (G_{A1}, G_{A2}), and
e) generating an error message (30) if a sufficiently large difference (ΔG) between the first total axle load value (G_{A1}) and the second total axle load value (G_{A2}) is determined.

7. Method for the plausibility check of measured values of an axle load measuring system (16), which values can be determined using a sensor system (20), with which measuring system the axle load resting on all axles of a vehicle (18) can be determined as a first total axle load value (G_{A1}), in particular using a device (10) according to at least one of claims 1 to 5, comprising the following method steps:
f) determining a first total axle load value (G_{A1}), which indicates the measured value of the mass resting on all vehicle axles,
g) calculating a first vehicle mass value (m₁) including payload by adding the first total axle load value (G_{A1}) to the value (m_{FA}) for the total mass of all vehicle axles taken into consideration,
h) calculating a second vehicle mass value (m₂) including payload using the formula m = F/a, where the value (a) represents the current vehicle acceleration and the value (F) represents the current driving force acting on the vehicle (18),
i) comparing the two vehicle mass values (m₁, m₂), and
j) generating an error message (30) if a sufficiently large difference (ΔG) between the first vehicle mass value (m₁) and the second vehicle mass value (m₂) is determined.

8. Method according to claim 6 or 7, **characterized in that** the first total axle load value (G_{A1}) or the first vehicle mass value (m₁) is allocated a first error interval (ΔF₁) of at most ± 5% and the second total axle load value (G_{A2}) or the second vehicle mass value (m₂) is allocated a second error interval (ΔF₂) of at most ± 10%.

9. Method according to claim 8, **characterized in that** during a plausibility check of the first total axle load value (G_{A1}) or the first vehicle mass value (m₁) an error message (30) is issued if the first total axle load value (G_{A1}) or the first vehicle mass value (m₁) is outside the second error interval (ΔF₂).

10. Method according to any of claims 6 to 9, **characterized in that** during a plausibility check of the second total axle load value (G_{A2}) or the second vehicle mass value (m₂) an error message (30) is issued if the second total axle load value (G_{A2}) or the vehicle mass value (m₂) is outside a third error interval (ΔF₃).

11. Method according to claim 10, **characterized in that** the third error interval (ΔF₃) is calculated from the value of the first error interval (ΔF₁) plus the value of the second error interval (ΔF₂).

12. Method according to any of claims 6 to 11, **characterized in that** the error message (30) is issued as an optical, acoustic and/or haptic signal.

13. Method according to any of claims 6 to 12, **characterized in that** the error message (30) is wirelessly transmitted to a vehicle-external computer (42).

14. Method according to any of claims 7 to 13, **characterized in that** the error message (30) is stored in an event memory (44) of the vehicle (18).

## Revendications

1. Dispositif (10) permettant de contrôler la plausibilité de valeurs de mesure d'un système de mesure de charge d'essieux (16) pouvant être déterminées au moyen d'un système de capteurs (20),
dans lequel, avec le système de mesure de charge d'essieux (16), la charge d'essieux reposant sur tous les essieux d'un véhicule (18) peut être définie comme une première valeur de charge d'essieux totale (G_{A1}),
dans lequel le dispositif (10) présente un comparateur (24) et une unité de calcul (26),
dans lequel une seconde valeur de charge d'essieux totale (G_{A2}) peut être calculée au moyen de l'unité de calcul (26),
dans lequel la première valeur de charge d'essieux totale (G_{A1}) et la seconde valeur de charge d'essieux totale (G_{A2}) peuvent être amenées au comparateur (24),
dans lequel une comparaison entre les deux valeurs de charge d'essieux totales (G_{A1}, G_{A2}) peut être effectuée au moyen du comparateur (24), et
dans lequel, en cas de différence suffisamment importante (ΔG) entre la première valeur de charge d'essieux totale (G_{A1}) et la seconde valeur de charge d'essieux totale (G_{A2}), un message d'erreur (30) peut être généré et/ou un générateur de signaux (32, 34, 36) peut être activé au moyen du comparateur (24),
**caractérisé en ce que** la valeur actuelle de l'accélération de véhicule (a) ainsi que la valeur actuelle de la force motrice (F) agissant sur le véhicule (18) peuvent être amenées à l'unité de calcul (26), **en ce qu'**au moyen de l'unité de calcul (26), à partir des valeurs de l'accélération de véhicule (a) et de la force motrice (F) agissant sur le véhicule (18) ainsi que de la formule m = F/a, la masse totale du véhicule (m), y compris la charge utile, peut être calculée, **et en ce qu'**à partir de ladite valeur de la masse totale du véhicule (m) moins la masse totale (m_{FA}) de tous les essieux de véhicule, la seconde valeur de charge d'essieux totale (G_{A2}) peut être calculée [G_{A2} = (F/a) - m_{FA}].

2. Dispositif (10) permettant de contrôler la plausibilité de valeurs de mesure d'un système de mesure de charge d'essieux (16) pouvant être déterminées au moyen d'un système de capteurs (20), dans lequel, avec le système de mesure de charge d'essieux (16), la charge d'essieux reposant sur tous les essieux d'un véhicule (18) peut être définie comme une première valeur de charge d'essieux totale (G_{A1}),
dans lequel le dispositif (10) présente un comparateur (24) et une unité de calcul (26),
**caractérisé en ce qu'**une première valeur de masse de véhicule (m₁) peut être calculée au moyen de l'unité de calcul (26) par addition de la première valeur de charge d'essieux totale (G_{A1}) et de la valeur de la masse totale (m_{FA}) de tous les essieux de véhicule (m₁ = G_{A1} + m_{FA}),
**en ce qu'**au moyen de l'unité de calcul (26), à partir des valeurs de l'accélération de véhicule (a) et de la force motrice (F) agissant sur le véhicule (18) ainsi que de la formule m = F/a, une seconde valeur de masse de véhicule (m₂), y compris la charge utile, peut être calculée,
**en ce que** la première valeur de masse de véhicule (m₁) et la seconde valeur de masse de véhicule (m₂) peuvent être amenées au comparateur (24),
**en ce qu'**une comparaison entre les deux valeurs de masse de véhicule (m₁, m₂) peut être effectuée au moyen du comparateur (24), et
**en ce que,** en cas de différence suffisamment importante (ΔG) entre la première valeur de masse de véhicule (m₁) et la seconde valeur de masse de véhicule (m₂), un message d'erreur (30) peut être généré et/ou un générateur de signaux (32, 34, 36) peut être activé au moyen du comparateur (24).

3. Dispositif selon l'une des revendications 1 ou 2, **caractérisé en ce que** le dispositif (10) présente un générateur de signaux (32, 34, 36) optiques, acoustiques et/ou haptiques pour l'émission d'un message d'erreur (30).

4. Dispositif selon l'une des revendications 1 à 3, **caractérisé en ce que** le dispositif (10) présente une unité d'envoi et de réception (38) fonctionnant sans fil, au moyen de laquelle le message d'erreur (30) peut être envoyé à une unité d'envoi et de réception (40) stationnaire fonctionnant sans fil qui est connectée à un ordinateur externe au véhicule (42).

5. Dispositif selon l'une des revendications 1 à 4, **caractérisé en ce que** le comparateur (24) est connecté à une mémoire d'événements (44) dans laquelle le message d'erreur (30) peut être mémorisé et à partir de laquelle le message d'erreur (30) peut être rappelé.

6. Procédé permettant de contrôler la plausibilité de valeurs de mesure d'un système de mesure de charge d'essieux (16) pouvant être déterminées au moyen d'un système de capteurs (20), avec lequel système la charge d'essieux reposant sur tous les essieux d'un véhicule (18) peut être définie comme une première valeur de charge d'essieux totale (G_{A1}), en particulier au moyen d'un dispositif (10) conformément à au moins l'une des revendications 1 à 5, présentant les étapes de procédé suivantes :
a) détermination d'une première valeur de charge d'essieux totale (G_{A1}) qui est la valeur mesurée de la masse reposant sur tous les essieux de véhicule,
b) calcul de la masse totale du véhicule (m), y compris la charge utile, à l'aide de la formule m = F/a, dans lequel la valeur (a) représente l'accélération de véhicule actuelle et la valeur (F) représente la force motrice agissant actuellement sur le véhicule (18),
c) calcul d'une seconde valeur de charge d'essieux totale (G_{A2}) à l'aide de la formule G_{A2} = (F/a) - m_{FA}, dans lequel la valeur m_{FA} représente la masse totale de tous les essieux de véhicule pris en compte,
d) comparaison des deux valeurs de charge d'essieux totales (G_{A1}, G_{A2}) ; et
e) génération d'un message d'erreur (30) lorsqu'une différence suffisamment importante (ΔG) entre la première valeur de charge d'essieux totale (G_{A1}) et la seconde valeur de charge d'essieux totale (G_{A2}) est détectée.

7. Procédé permettant de contrôler la plausibilité de valeurs de mesure d'un système de mesure de charge d'essieux (16) pouvant être déterminées au moyen d'un système de capteurs (20), avec lequel système la charge d'essieux reposant sur tous les essieux d'un véhicule (18) peut être définie comme une première valeur de charge d'essieux totale (G_{A1}), en particulier au moyen d'un dispositif (10) conformément à au moins l'une des revendications 1 à 5, présentant les étapes de procédé suivantes :
f) détermination d'une première valeur de charge d'essieux totale (G_{A1}) qui est la valeur mesurée de la masse reposant sur tous les essieux de véhicule,
g) calcul d'une première valeur de masse de véhicule (m₁), y compris la charge utile, par addition de la première valeur de charge d'essieux totale (G_{A1}) et de la valeur (m_{FA}) pour la masse totale de tous les essieux de véhicule pris en compte,
h) calcul d'une seconde valeur de masse de véhicule (m₂), y compris la charge utile, à l'aide de la formule m = F/a, dans lequel la valeur (a) représente l'accélération de véhicule actuelle et la valeur (F) représente la force motrice agissant actuellement sur le véhicule (18),
i) comparaison des deux valeurs de masse de véhicule (m₁, m₂) ; et
j) génération d'un message d'erreur (30) lorsqu'une différence suffisamment importante (ΔG) entre la première valeur de masse de véhicule (m₁) et la seconde valeur de masse de véhicule (m₂) est détectée.

8. Procédé selon la revendication 6 ou 7, **caractérisé en ce qu'**un premier intervalle d'erreur (ΔF₁) d'au plus ± 5 % est attribué à la première valeur de charge d'essieux totale (G_{A1}) ou à la première valeur de masse de véhicule (m₁) et un deuxième intervalle d'erreur (ΔF₂) d'au plus ± 10 % est attribué à la seconde valeur de charge d'essieux totale (G_{A2}) ou à la seconde valeur de masse de véhicule (m₂).

9. Procédé selon la revendication 8, **caractérisé en ce que,** lors d'un contrôle de la plausibilité de la première valeur de charge d'essieux totale (G_{A1}) ou de la première valeur de masse de véhicule (m₁), un message d'erreur (30) est émis lorsque la première valeur de charge d'essieux totale (G_{A1}) ou la première valeur de masse de véhicule (m₁) se situe en dehors du deuxième intervalle d'erreur (ΔF₂).

10. Procédé selon l'une des revendications 6 à 9, **caractérisé en ce que**, lors d'un contrôle de la plausibilité de la seconde valeur de charge d'essieux totale (G_{A2}) ou de la seconde valeur de masse de véhicule (m₂), un message d'erreur (30) est émis lorsque la seconde valeur de charge d'essieux totale (G_{A2}) ou la valeur de masse de véhicule (m₂) se situe en dehors d'un troisième intervalle d'erreur (ΔF₃).

11. Procédé selon la revendication 10, **caractérisé en ce que** le troisième intervalle d'erreur (ΔF₃) est calculé à partir de la valeur du premier intervalle d'erreur (ΔF₁) plus la valeur du deuxième intervalle d'erreur (ΔF₂).

12. Procédé selon l'une des revendications 6 à 11, **caractérisé en ce que** le message d'erreur (30) est émis en tant que signal optique, acoustique et/ou haptique.

13. Procédé selon l'une des revendications 6 à 12, **caractérisé en ce que** le message d'erreur (30) est transmis sans fil à un ordinateur externe au véhicule (42).

14. Procédé selon l'une des revendications 7 à 13, **caractérisé en ce que** le message d'erreur (30) est mémorisé dans une mémoire d'événements (44) du véhicule (18).
